# FASCICULE DE BREVET EUROPEEN

(11) **EP 1 346 874 B1**
(45) Date de publication et mention de la délivrance du brevet: **18.05.2005**
(21) Numéro de dépôt: 03290590.3
(22) Date de dépôt: 11.03.2003
(51) Int. Cl.: B60Q 1/04

(54) **Dispositif de montage d'un bloc optique sur des éléments de structure d'un véhicule automobile**
Einbau einer Beleuchtungseinheit auf Karosserieteile eines Fahrzeugs
Mounting a lighting unit on vehicle bodypart

(30) Priorité: 19.03.2002 FR 0203354
(43) Date de publication de la demande: 24.09.2003
(73) Titulaire: Peugeot Citroen Automobiles S.A., 78140 Vélizy Villacoublay (FR)
(72) Inventeur: Piranda, Bruno, 91880 Bouville (FR); Fromentin, Bernard, 78620 l'Etang-la-Ville (FR); Bellini, Lionel David, 92100 Boulogne-Billancourt (FR)
(74) Mandataire: Robert, Jean-François

(56) Documents cités:
- DE-A- 19 732 301
- FR-A- 2 792 588
- US-A- 4 387 920

## Description

La présente invention concerne en général les véhicules automobiles, et en particulier le montage des blocs optiques sur les véhicules.

L'invention se rapporte plus précisément à un dispositif de montage d'un bloc optique sur des éléments de structure d'un véhicule automobile du type comprenant un boîtier fermé par une glace, et des organes de liaison du bloc optique avec la structure adaptés pour permettre le déplacement de celui-ci lors d'un choc frontal.

Le document DE 19732301 divulgue un dispositif de montage de bloc optique selon le préambule de la revendication 1.

On connaît d'autres dispositifs de montage de ce type, en particulier par le document FR 2792588, qui décrit des moyens de pivotement du bloc optique autour d'un axe vertical lors d'un choc frontal. Dans ce dispositif connu, les moyens de pivotement sont formés par deux doigts opposés et verticaux, solidaires du boîtier, l'un des doigts étant disposé à la partie supérieure du boîtier et l'autre étant disposé à la partie inférieure dudit boîtier, lesdits doigts étant alignés sur l'axe vertical de pivotement et en appui sur un élément de carrosserie adjacent. En outre, l'axe vertical de pivotement du bloc optique est situé sensiblement dans la partie médiane du boîtier. Un tel dispositif de montage s'avère parfaitement adapté pour satisfaire les critères réparabilité, imposant notamment un recul significatif de la partie frontale du bloc en cas de choc d'intensité modérée, afin de limiter le coût des réparations. Dans ce dispositif connu, ce recul de la partie frontale du bloc est assuré par une cinématique de rotation du bloc autour de l'axe de pivotement, accompagné d'un déclipsage de l'aile pour ne pas entraver le déplacement du bloc optique.

Ce dispositif connu présente toutefois un inconvénient : sa cinématique de rotation ne génère un recul significatif qu'au niveau de la partie frontale du bloc optique et a tendance à faire avancer la partie latérale du bloc, située à l'extérieur par rapport au véhicule, ce qui va à l'encontre des critères à respecter en matière de choc piéton. En effet, ceux-ci imposent un recul du bloc optique dans son ensemble.

Le but de la présente invention est de proposer un dispositif de montage d'un bloc optique sur des éléments de structure d'un véhicule automobile permettant de satisfaire simultanément les critères de réparabilité et de choc piéton.

A cet effet, l'invention a pour objet un dispositif de montage d'un bloc optique sur des éléments de structure d'un véhicule automobile du type comprenant un boîtier fermé par une glace, et des organes de liaison du boîtier avec la structure adaptés pour permettre le déplacement de celui-ci lors d'un choc frontal, caractérisé en ce que les organes de liaison comportent des premiers moyens de guidage conformés pour permettre le coulissement de la partie avant du boîtier vers l'arrière du véhicule lors d'un choc frontal, tandis que des seconds moyens de guidage sont prévus pour déplacer simultanément la partie latérale du boîtier vers le côté adjacent du véhicule.

Le dispositif selon l'invention peut également comporter une ou plusieurs des caractéristiques suivantes :
- les premiers moyens de guidage de la partie avant du boîtier sont constitués d'un coulisseau apte à se déplacer dans une glissière, ces derniers étant montés respectivement sur le boîtier et sur un élément de structure adjacent ou inversement,
- la glissière est conformée de façon sensiblement linéaire, et présente une inclinaison par rapport à la direction longitudinale du véhicule, de sorte que le coulissement de la partie avant du boîtier vers l'arrière du véhicule s'accompagne simultanément d'un déplacement de ladite partie avant vers le côté adjacent du véhicule,
- l'inclinaison de la glissière par rapport à la direction longitudinale du véhicule est d'un angle compris entre environ 5° et 20°,
- les seconds moyens de guidage sont constitués d'une biellette articulée à une première extrémité sur le boîtier ou sur un support solidaire de ce dernier, et à une seconde extrémité sur un élément de structure du véhicule, de sorte que le déplacement du boîtier dans la glissière provoque simultanément le pivotement de la biellette autour de sa seconde extrémité,
- le boîtier présente au moins une zone d'appui sur un élément de structure du véhicule, permettant un guidage du boîtier dans un plan sensiblement horizontal, lors de son déplacement,
- les bords longitudinaux de la glissière dans laquelle se déplace le coulisseau présentent un écartement relatif moindre à l'arrière qu'à l'avant, de sorte que ledit coulisseau est soumis à un effort résistant augmentant à mesure qu'il se déplace vers l'arrière du véhicule,
- au moins l'un des bords longitudinaux de la glissière présente un profil en dents de scie de façon à opposer un effort résistant au coulisseau lorsqu'il se déplace dans la glissière sous la contrainte latérale des bords longitudinaux.

L'invention a également pour objet un bloc optique de véhicule automobile comportant un dispositif de montage tel que mentionné ci-dessus.

D'autres caractéristiques et avantages de la présente invention apparaîtront à la lecture de la description détaillée qui va suivre, d'un exemple de réalisation non limitatif de l'invention et à l'examen des dessins annexés sur lesquels :
- la figure 1 est une vue schématique en perspective d'une partie de la face avant d'un véhicule automobile comportant un bloc optique équipé d'un dispositif de montage conforme à l'invention,
- la figure 2 est une vue schématique montrant le dessus du bloc optique de la figure 1, afin d'illustrer notamment la cinématique de déplacement du bloc,
- les figures 3 et 4 sont des vues schématiques en perspective illustrant les organes de liaison du bloc optique de la figure 1 avec la structure du véhicule, respectivement avec et sans représentation du bloc optique,
- les figures 5A et 5B sont des vues schématiques d'une variante de réalisation des organes de liaison entre le bloc optique de la figure 1 et la structure du véhicule, illustrant la glissière dans laquelle se déplace la partie avant du bloc optique, respectivement en perspective et du dessus, et
- la figure 6 est une vue d'une variante de réalisation des organes de liaison du bloc optique de la figure 1 avec la structure du véhicule, illustrant le dessus de la glissière dans laquelle se déplace la partie avant du bloc optique.

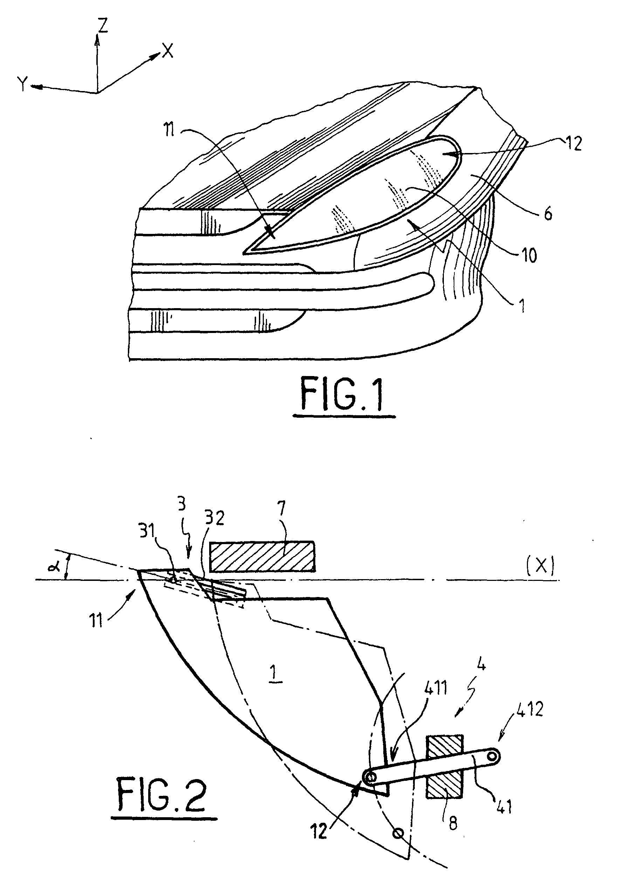

On a représenté à la figure 1 une partie de la face avant d'un véhicule automobile pourvu d'un bloc optique.

De manière classique, le bloc optique se compose d'un boîtier 1 fermé par une glace 10 et d'un dispositif de montage sur les éléments de carrosserie et/ou de structure adjacents. Le bloc optique et son boîtier 1 comportent classiquement une partie avant 11, également désignée « pointe de l'optique » par l'homme du métier, ainsi qu'une partie latérale 12, située extérieurement par rapport au véhicule.

Classiquement, le dispositif de montage comprend des pattes de fixation (non représentées) destinée à maintenir en place le boîtier 1. De façon connue, ces pattes de fixation peuvent être conformées pour se rompre sous l'effet d'un choc frontal, de façon à satisfaire les critères de réparabilité.

Selon l'invention, le dispositif de montage comporte en outre des organes de liaison du boîtier 1 avec la structure 2 pourvus de moyens de guidage du boîtier lors de son recul. Comme représenté aux figures 2 à 4, des premiers moyens de guidage 3 sont prévus pour permettre le coulissement de la partie avant 11 du boîtier 1 vers l'arrière du véhicule lors d'un choc frontal, tandis que des seconds moyens de guidage 4 sont prévus pour déplacer simultanément la partie latérale 12 du boîtier 1 vers le côté adjacent du véhicule.

On comprendra que le déplacement de la partie latérale 12 du boîtier 1 est rendu possible par des moyens de déclipsage (non représentés) de l'aile 6.

Les premiers moyens de guidage 3 permettant le coulissement de la partie avant 11 du boîtier 1 sont classiques et connus de l'homme du métier. Ces moyens de guidage 3 comprennent par exemple une glissière 32 dans laquelle se déplace un coulisseau 31.

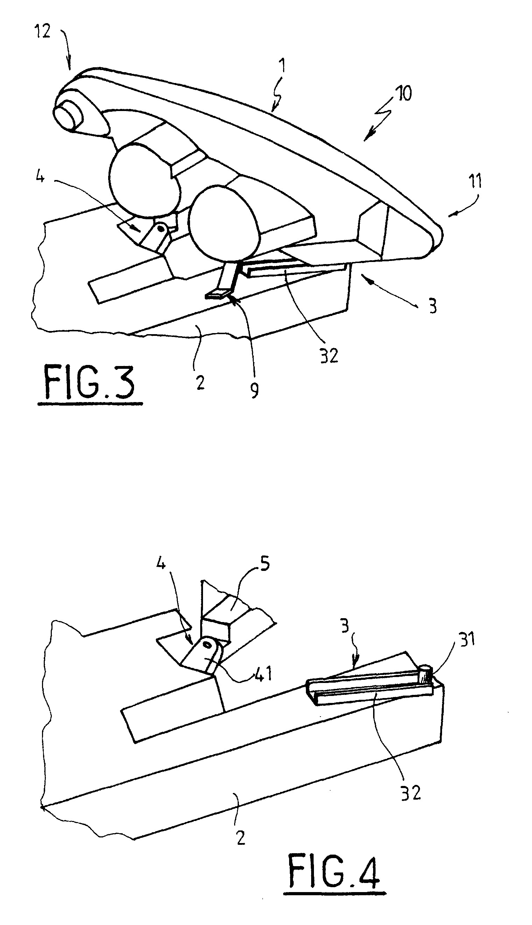

Selon un mode de réalisation de l'invention, le coulisseau 31 peut être constitué d'un doigt monté sur un flan inférieur du boîtier 1, ce doigt coopérant avec une glissière 32 ménagée sur un élément de structure du véhicule. Comme cela est visible à la figure 3, le doigt peut être fixé au flan inférieur du boîtier 1 via une patte de liaison 33 sensiblement horizontale.

Dans une variante de réalisation de l'invention, le coulisseau 31 constitué d'un doigt peut être monté sur un élément de structure du véhicule tel que le brancard 2, tandis que la glissière 32 coopérant avec ce doigt peut être ménagée dans le corps du boîtier 1.

Notons que la glissière 32 des premiers moyens de guidage 3 peut être de forme sensiblement linéaire (figures 2 à 4). En variante, elle peut être incurvée ou présenter des portions incurvées.

Selon une caractéristique avantageusement de l'invention, la glissière 32 présente une inclinaison d'un angle α par rapport à la direction longitudinale x du véhicule, de sorte que le coulissement de la partie avant 11 du boîtier 1 vers l'arrière du véhicule s'accompagne simultanément d'un déplacement de ladite partie avant 11 vers le côté adjacent du véhicule. L'angle d'inclinaison α de la glissière évoqué précédemment peut être compris entre 5° et 20°. Avec un angle d'inclinaison α de 11° par exemple, la partie avant 11 du boîtier se déplacera d'environ 20 mm pour un recul longitudinal d'environ 100 mm.

Une telle inclinaison de la glissière 32 permettra avantageusement un recul conséquent du boîtier 1 en cas de choc, en s'affranchissant de l'obstacle que peut constituer un élément tel qu'un pendard 7 positionné immédiatement derrière la partie avant 11 du boîtier du bloc optique (figure 2).

Par ailleurs, comme nous l'avons vu précédemment, des seconds moyens de guidage 4 sont prévus pour déplacer simultanément la partie latérale 12 du boîtier 1 vers le côté adjacent du véhicule (figures 2 à 4).

Ces seconds moyens de guidage 4 peuvent être constitués d'une biellette 41, disposée de façon sensiblement horizontale, articulée à une première extrémité 411 sur le boîtier 1 et à une seconde extrémité 412 sur un élément de structure du véhicule. A sa première extrémité 411, la biellette 41 peut être articulée sur un flan inférieur du boîtier 1 ou sur un support 5 solidaire rigidement du boîtier 1 (figure 4).

La seconde extrémité 412 de la biellette 41 est articulée sur le brancard 2 ou un élément de structure, autour d'un axe de rotation sensiblement vertical.

On comprendra que le déplacement du boîtier 1 dans la glissière 32 vers l'arrière du véhicule provoque simultanément le pivotement de la biellette 41 autour de sa seconde extrémité 412, de sorte que la première extrémité 411 se déplace vers le côté adjacent.

On notera que le déplacement circulaire de la partie latérale 12 du boîtier 1 permet également de contourner des éléments situés à proximité de la partie arrière 12 du boîtier 1, tels qu'un organe de gestion électronique 8 du moteur ou des éléments de carrosserie environnants tels qu'un support d'aile, une doublure d'aile ou un élément de renfort (figure 4).

Bien entendu, le boîtier 1 est monté mobile en rotation par rapport à la glissière 32, autour d'un axe de rotation sensiblement vertical correspondant à celui du doigt coopérant avec la glissière 32. De la même façon, le boîtier 1 est articulé rapport à la première extrémité de la biellette 41 autour d'un axe de rotation sensiblement vertical.

Dans une variante de réalisation de l'invention non représentée, les seconds moyens de guidage peuvent être analogues aux premiers moyens de guidage, c'est à dire qu'ils peuvent être constitués d'une glissière solidaire de la structure du véhicule dans lequel peut se déplacer un doigt monté sur la partie arrière du boîtier 1.

Avantageusement, le boîtier 1 présente une zone d'appui dans sa partie inférieure sur un élément de structure, par exemple le brancard 2 du véhicule, permettant un guidage du boîtier 1 dans un plan sensiblement horizontal, lors de son déplacement. Comme illustré aux figures 3 et 4, une patte de guidage 9 peut en effet être prévue sur le brancard 2 pour constituer un appui vertical facilitant le guidage du boîtier 1, s'ajoutant au maintien vertical obtenu par les premiers et seconds moyens de guidage.

Par ailleurs, le dispositif de montage du bloc optique selon l'invention peut comporter d'autres caractéristiques particulièrement avantageuses.

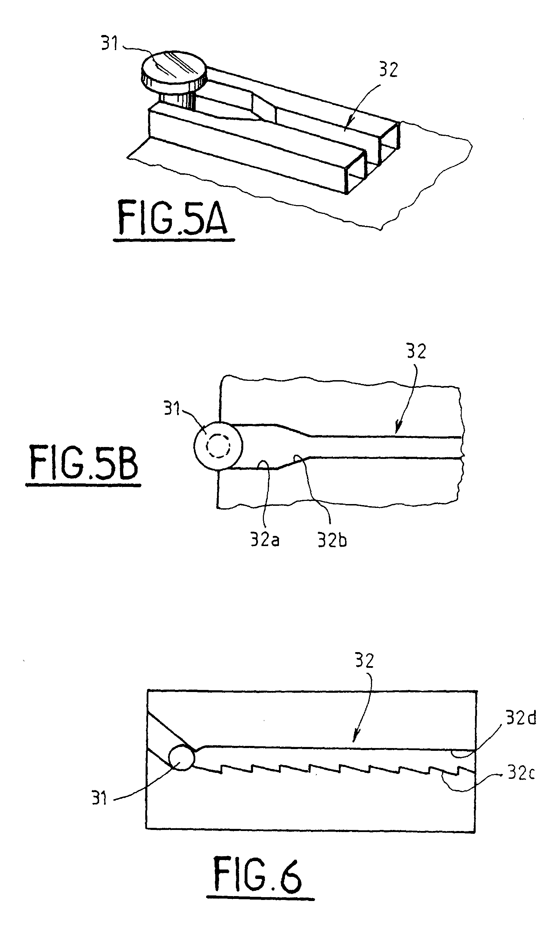

En référence aux figures 5A et 5B, les bords (32a, 32b) longitudinaux de la glissière 32 dans laquelle se déplace le coulisseau 31, ou plus précisément son doigt, présentent un écartement relatif moindre à l'arrière qu'à l'avant. Cette différence d'écartement peut être progressive sur toute la longueur de la glissière 32 ou, en variante, être localisée sur une portion de longueur de la glissière 32. Le coulisseau 31 est de cette façon soumis à un effort résistant dirigé vers l'avant, qui augmente à mesure qu'il se déplace vers l'arrière du véhicule.

En référence à la figure 6, l'un 32c des bords longitudinaux 32c, 32d de la glissière 32 présente un profil en dents de scie. Ainsi, le coulisseau 31 est soumis à un effort résistant lorsqu'il se déplace vers l'arrière du véhicule.

Bien entendu les deux modes de réalisation précédents permettant d'appliquer un effort résistant sur le coulisseau 31 peuvent être adoptés sélectivement ou en combinaison l'un de l'autre.

Comme on le conçoit, et de façon particulièrement avantageuse, l'application d'un effort résistant sur le coulisseau 31 lors de son déplacement permettra de dissiper une partie de l'énergie emmagasinée par la jambe du piéton venant au contact du véhicule. L'homme du métier sait en effet qu'un effort inférieur à 5 kN appliqué sur le fémur d'un piéton ne risque de lui occasionner de blessure grave telle qu'une fracture. Il convient cependant de se rapprocher au maximum de cette limite de 5 kN pour dissiper l'énergie dans un minimum de course. Les modes de réalisation des bords 32a, 32b, 32c, 32d, longitudinaux de la glissière 32 décrits précédemment permettront efficacement d'appliquer un effort résistant de l'ordre de 5 kN sur la jambe d'un piéton.

Bien entendu, l'invention n'est pas limitée aux modes de réalisation particuliers décrits précédemment.

## Revendications

1. Dispositif de montage d'un bloc optique sur des éléments de structure (2) d'un véhicule automobile du type comprenant un boîtier (1) fermé par une glace (10), et des organes de liaison du boîtier (1) avec la structure (2) adaptés pour permettre le déplacement de celui-ci lors d'un choc frontal, les organes de liaison comportant des premiers moyens de guidage (3) conformés pour permettre le coulissement de la partie avant (11) du boîtier (1) vers l'arrière du véhicule lors d'un choc frontal, **caractérisé en ce que** des seconds moyens de guidage (4) sont prévus pour déplacer simultanément la partie latérale (12) du boîtier (1) vers le côté adjacent du véhicule.

2. Dispositif selon la revendication 1, **caractérisé en ce que** les premiers moyens de guidage (3) de la partie avant (11) du boîtier (1) sont constitués d'un coulisseau (31) apte à se déplacer dans une glissière (32), ces derniers (31, 32) étant montés respectivement sur le boîtier (1) et sur un élément de structure (2) adjacent ou inversement.

3. Dispositif selon la revendication 2, **caractérisé en ce que** la glissière (32) est conformée de façon sensiblement linéaire, et présente une inclinaison par rapport à la direction longitudinale (x) du véhicule, de sorte que le coulissement de la partie avant (11) du boîtier (1) vers l'arrière du véhicule s'accompagne simultanément d'un déplacement de ladite partie avant (11) vers le côté adjacent du véhicule.

4. Dispositif selon la revendication 3, **caractérisé en ce que** l'inclinaison de la glissière (32) par rapport à la direction longitudinale (x) du véhicule est d'un angle (α) compris entre environ 5° et 20°.

5. Dispositif selon l'une quelconque des revendications 1 à 4, **caractérisé en ce que** les seconds moyens de guidage (4) sont constitués d'une biellette (41) articulée à une première extrémité sur le boîtier (1) ou sur un support (5) solidaire de ce dernier (1), et à une seconde extrémité sur un élément de structure (2) du véhicule, de sorte que le déplacement du boîtier dans la glissière provoque simultanément le pivotement de la biellette (41) autour de sa seconde extrémité.

6. Dispositif selon l'une quelconque des revendications 1 à 5, **caractérisé en ce que** le boîtier (1) présente au moins une zone d'appui sur un élément de structure (2) du véhicule, permettant un guidage du boîtier (1) dans un plan sensiblement horizontal, lors de son déplacement.

7. Dispositif selon l'une quelconque des revendications 2 à 6, **caractérisé en ce que** les bords (32a, 32b) longitudinaux de la glissière (32) dans laquelle se déplace le coulisseau (31) présentent un écartement relatif moindre à l'arrière qu'à l'avant, de sorte que ledit coulisseau (31) est soumis à un effort résistant augmentant à mesure qu'il se déplace vers l'arrière du véhicule.

8. Dispositif selon l'une quelconque des revendications 2 à 7 **caractérisé en ce qu'**au moins l'un (32c) des bords longitudinaux (32c, 32d) de la glissière (32) présente un profil en dents de scie de façon à opposer un effort résistant au coulisseau (31) lorsqu'il se déplace dans la glissière (32) sous la contrainte latérale des bords longitudinaux.

9. Bloc optique de véhicule automobile, **caractérisé en ce qu'**il comporte un dispositif de montage selon l'une quelconque des revendications 1 à 8.

## Patentansprüche

1. Vorrichtung zur Montage einer Beleuchtungseinheit an Elementen des Aufbaus (2) eines Kraftfahrzeugs, wobei die Einheit ein von einer Scheibe (10) geschlossenes Gehäuse (1) aufweist, sowie Organe zur Verbindung des Gehäuses (1) mit dem Aufbau (2), die bei einem Frontalzusammenstoß die Verschiebung der Einheit erlauben und erste Führmittel (3) aufweisen, die bei einem Frontalzusammenstoß die Bewegung des vorderen Abschnitts (11) des Gehäuses (1) zur Hinterseite des Fahrzeugs ermöglichen, **dadurch gekennzeichnet, dass** zweite Führmittel (4) gleichzeitig den seitlichen Abschnitt (12) des Gehäuses (1) zur angrenzenden Seite des Fahrzeugs verschieben.

2. Vorrichtung nach Anspruch 1, **dadurch gekennzeichnet, dass** die ersten Mittel (3) zum Führen des vorderen Abschnitts (11) des Gehäuses (1) aus einem Schlitten (31) bestehen, der sich in einer Schiene (32) bewegen kann, wobei die Mittel (31, 32) am Gehäuse (1) beziehungsweise an einem angrenzenden Element des Aufbaus (2) montiert sind oder umgekehrt.

3. Vorrichtung nach Anspruch 2, **dadurch gekennzeichnet, dass** die Schiene (32) im Wesentlichen linear geformt und gegenüber der Längsrichtung (x) des Fahrzeugs geneigt ist, sodass die Bewegung des vorderen Abschnitts (11) des Gehäuses (1) zur Hinterseite des Fahrzeugs mit einer Verschiebung des vorderen Abschnitts (11) zur angrenzenden Seite des Fahrzeugs einhergeht.

4. Vorrichtung nach Anspruch 3, **dadurch gekennzeichnet, dass** die Schiene (32) gegenüber der Längsrichtung (x) des Fahrzeugs um einen Winkel (α) zwischen ungefähr 5 und 20 Grad geneigt ist.

5. Vorrichtung nach einem der Ansprüche 1 bis 4, **dadurch gekennzeichnet, dass** die zweiten Führmittel (4) aus einem Schwingarm (41) bestehen, der an einem ersten Ende am Gehäuse (1) oder an einem mit diesem fest verbundenen Träger (5) und an einem zweiten Ende an einem Element des Aufbaus (2) des Fahrzeugs angelenkt ist, sodass die Verschiebung des Gehäuses in der Schiene gleichzeitig das Verschwenken des Schwingarms (41) um sein zweites Ende bewirkt.

6. Vorrichtung nach einem der Ansprüche 1 bis 5, **dadurch gekennzeichnet, dass** das Gehäuse (1) mindestens einen Bereich aufweist, der an einem Element des Aufbaus (2) des Fahrzeugs anliegt, was eine Führung des Gehäuses (1) bei seiner Bewegung in einer im Wesentlichen horizontalen Ebene ermöglicht.

7. Vorrichtung nach einem der Ansprüche 2 bis 6, **dadurch gekennzeichnet, dass** die Längsränder (32a, 32b) der Schiene (32), in der sich der Schlitten (31) bewegt, hinten eine geringere Spurweite als vorne aufweisen, sodass der Schlitten (31) einen Fahrwiderstand erfährt, der zunimmt, je weiter er sich zur Hinterseite des Fahrzeugs bewegt.

8. Vorrichtung nach einem der Ansprüche 2 bis 7, **dadurch gekennzeichnet, dass** mindestens einer der Längsränder (32c, 32d) der Schiene (32), nämlich der Rand (32c), ein Sägezahnprofil aufweist, sodass der Schlitten (31) unter dem seitlichen Druck der Längsränder einen Fahrwiderstand erfährt, wenn er sich in der Schiene (32) bewegt.

9. Beleuchtungseinheit für ein Kraftfahrzeug, **dadurch gekennzeichnet, dass** sie eine Montagevorrichtung nach einem der Ansprüche 1 bis 8 aufweist.

## Claims

1. Device for mounting an optical unit on structural elements (2) of a motor vehicle of the type comprising a housing (1) enclosed by a glass (10), and members for connecting the housing (1) to the structure (2) adapted to allow the displacement of said housing at the time of a frontal impact, the connecting members comprising first guidance means (3) shaped so as to allow the front portion (11) of the housing (1) to slide towards the back of the vehicle at the time of a frontal impact, **characterised in that** second guidance means (4) are provided in order simultaneously to displace the side portion (12) of the housing (1) towards the adjacent side of the vehicle.

2. Device according to Claim 1, **characterised in that** the first guidance means (3) of the front portion (11) of the housing (1) are constituted by a slider (31) capable of being displaced in a slide rail (32), the latter (31, 32) being mounted respectively on the housing (1) and on an adjacent structural element (2) or vice versa.

3. Device according to Claim 2, **characterised in that** the slide rail (32) has a substantially linear shape, and has a slope with respect to the longitudinal direction (x) of the vehicle, so that the sliding of the front portion (11) of the housing (1) towards the back of the vehicle is accompanied simultaneously by displacement of said front portion (11) towards the adjacent side of the vehicle.

4. Device according to Claim 3, **characterised in that** the slope of the slide rail (32) with respect to the longitudinal direction (x) of the vehicle is at an angle (α) comprised between approximately 5° and 20°.

5. Device according to any one of Claims 1 to 4, **characterised in that** the second guidance means (4) are constituted by a link (41) articulated at a first end to the housing (1) or to a support (5) integral with the latter (1), and at a second end to a structural element (2) of the vehicle, so that the displacement of the housing in the slide rail simultaneously causes the link (41) to pivot about its second end.

6. Device according to any one of Claims 1 to 5, **characterised in that** the housing (1) has at least one area of support on a structural element (2) of the vehicle, allowing the housing (1) to be guided in a substantially horizontal plane when it is displaced.

7. Device according to any one of Claims 2 to 6, **characterised in that** the longitudinal edges (32a, 32b) of the slide rail (32) in which the slider (31) is displaced have a relative spacing that is less at the back than at the front, so that said slider (31) is subject to resistance that increases as it is displaced towards the back of the vehicle.

8. Device according to any one of Claims 2 to 7 **characterised in that** at least one (32c) of the longitudinal edges (32c, 32d) of the slide rail (32) has a saw-tooth profile so as to offer resistance to the slider (31) when it is displaced in the slide rail (32) while subject to lateral force from the longitudinal edges.

9. Optical unit of a motor vehicle, **characterised in that** it comprises a mounting device according to any one of Claims 1 to 8.
